# EUROPEAN PATENT SPECIFICATION

(11) **EP 1 296 067 B1**
(45) Date of publication and mention of the grant of the patent: **01.03.2006**
(21) Application number: 02256397.7
(22) Date of filing: 16.09.2002
(51) Int. Cl.: F15C 5/00, F04B 43/04

(54) **Passive microvalve**
Passives Mikroventil
Microvanne passive

(30) Priority: 25.09.2001 GB 0123054
(43) Date of publication of application: 26.03.2003
(73) Proprietor: Randox Laboratories Ltd., Crumlin, County Antrim BT29 4QY (GB)
(72) Inventor: Gamble, Harold Samuel, Dromore, Co Down BT25 1HA (GB); Mitchell, Samuel John Neil, Newry, Co Down BT34 1NZ (GB); Bien, Daniel Chia Sheng, Bukit Mewah, 43000 Kajang, Selangor D.E. (MY); Fitzgerald, Stephen Peter, Randox Lab. Ltd., Crumlin, Co Antrim BT29 4QY (GB)
(74) Representative: Skone James, Robert Edmund

(56) References cited:
- EP-A- 0 483 469
- WO-A-91/01464
- WO-A-92/01160
- US-A- 5 171 132
- US-A- 5 259 737
- US-A- 5 375 979
- US-A- 5 529 465
- US-A- 5 759 015
- US-A- 5 780 748

## Description

The present invention relates to a passive microvalve that may be used to control the flow of liquid or gas, for example, in a microfluidic system.

In the prior art there are several types of passive microvalve that can be used for the control of flow within microfluidic systems. The fabrication of most of these valves is achieved using silicon micromachining techniques.

In U.S. Pat. No. 5375979, microvalves were fabricated by bulk micromachining of single crystal silicon. The valves comprise a silicon cantilever beam or plate that will deflect in response to applied forward or reverse pressure to open or shut respectively. EP-A-0483469 describes the fabrication of a similar type of cantilever valve by surface micromachining techniques.

U.S. Pat. 5529465 describes a micropump comprising surface micromachined valves. A cantilever bridge is hinged down on all sides and has a flap or plate in the centre supported by flexible arms. The centre plate will open and close the valve during forward and reverse pressure respectively.

The above microvalves operate in the direction where fluid flows firstly through a hole in the substrate and then outwards through the valve. In applications such as micropumps this necessitates the inlet and outlet valves to be formed on opposite surfaces of the silicon wafer. The requirement for precision processing on both wafer surfaces results in complex fabrication processes and is a barrier to further miniaturization of the overall systems.

U.S. Pat. 5171132, 5259737, and 5759015, and WO-A-92/01160 describe bulk micromachined valves that allow the inlet and outlet valve to be combined for micropump applications. The valve wafer is enclosed by a cavity wafer and bonded to another wafer with inlet and outlet holes or channels.

WO 91/01464 discloses an anti-return valve made up of a thick structure utilizing glass plates.

Microvalves in the prior art, which were fabricated utilising bulk or surface micromachining require processing of at least three substrates when used as stand alone devices or when integrated into other microfluidic devices, for example a micropump.

In accordance with the present invention, a passive microvalve comprises a substrate having a first aperture on which is fabricated a surface micromachined valve structure formed by an upper plate mounted above the substrate and having a second aperture opening into a space defined between the substrate and the upper plate, and a closure member mounted in the space and movable between a first position in which it allows fluid flow between the first and second apertures and a second position in which it closes the second aperture. Typically, this microvalve will be fabricated as an outlet valve, the first aperture constituting an outlet aperture and the second aperture constituting an inlet aperture.

The present microvalve invention minimises the number of substrates being utilised or processed. This will simplify the overall fabrication process, and further improve the miniaturisation of the overall system. The valve is fabricated utilising surface micromachining techniques. The direction of flow is such that fluid flows first through the microvalve then through the substrate, eg wafer, i.e. in the opposite direction to surface valves in the prior art. A major advantage of the present invention is that in the fabrication of structures that require combinations of inlet and outlet valves, such as in micropumps, both types of valve can be fabricated on the same substrate surface. For most applications of the valve, processing is only required on two substrates.

Fluid flow through the uni-directional valve (or check-valve) is in the opposite direction to that of prior art designs and is thus of considerable potential in integrated systems.

The closure member can be mounted in a variety of ways on the substrate. For example, the closure member may be supported on a flexible arm in a cantilever fashion. Preferably, however, the closure member is supported by a set of flexible arms, typically four, and conveniently the closure member and arms are fabricated as a flexible diaphragm.

In some cases, the closure member can be constructed so that it is physically incapable of moving so as to close the first aperture but conveniently the microvalve further comprises at least one stop to limit movement of the closure member towards the first aperture. This stop could be provided on the closure member but is preferably provided on the substrate.

As mentioned above, the microvalve can be formed using conventional micromachining techniques from typical semiconductor materials such as silicon or gallium arsenide, glass, polyamide, quartz, ceramic, plastic or metal. In the preferred arrangement, the substrate is formed by a single crystal silicon wafer while one or both of the upper plate and closure member are formed by polycrystalline silicon.

The microvalve according to the invention can be used in a wide variety of applications including microfluidic devices such as micropumps or multichannel analysers.

Thus, a micropump may comprise a substrate and a flexible diaphragm located over the substrate to define the pump chamber; an inlet microvalve and an outlet microvalve mounted on a side of the substrate facing the flexible diaphragm and in communication with respective apertures extending through the substrate, at least one of the microvalves being constructed in accordance with the present invention; and an actuator for causing the diaphragm to flex and thereby cause fluid flow in a pumping direction through the micropump.

Some examples of passive microvalves, a micropump and methods for fabricating the microvalves will now be described with reference to the accompanying drawings, in which:-
Figure 1 is a schematic cross-section of an example of a microvalve;
Figures 2a-2c are plan views of the three principle layers of the microvalve shown in Figure 1;
Figures 3a and 3b are cross-sections similar to Figure 1 but showing the condition of the microvalve under different pressure distributions;
Figure 4 is a schematic cross-section of a microvalve incorporated into a microfluid device;
Figure 5 is a schematic cross-section of a microvalve incorporated into a micropump;
Figures 6-13 illustrate different stages in the fabrication of a microvalve; and,
Figures 14 and 15 illustrate graphically the results of tests carried out on a microvalve.

The passive uni-directional microvalve structure comprises a movable valve plate supported by flexible arms. The valve plate moves, according to the applied pressure, to either increase or decrease the flowrate of liquid or gas.

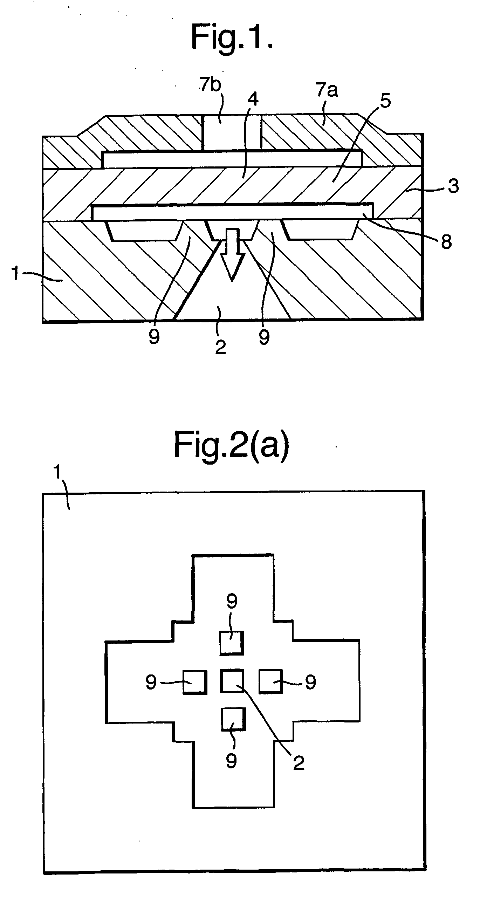

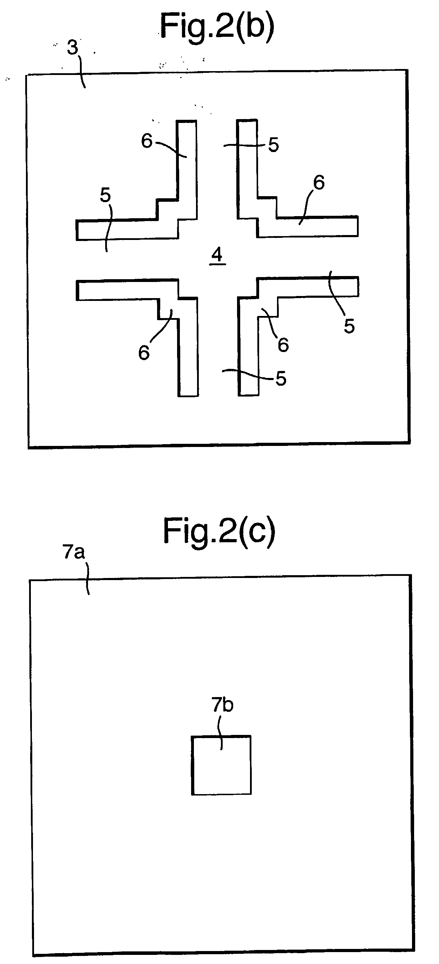

Figure 1 shows a schematic cross-section of the microvalve with plan views of the three principal layers shown in Figure 2. A substrate 1, Figure 2a, provides an outwardly tapering outlet aperture 2 for the fluid flow. A second layer 3, Figure 2b, consists of a movable valve plate (or closure member) 4 with flexible supporting arms 5, the outer ends of which are attached to the substrate 1. Fluid can flow through holes 6 around these supporting arms 5 during operation of the valve. A top plate 7a, Figure 2c defines a valve closure bridge containing an inlet aperture 7b to enable fluid flow. The top plate 7a and substrate 1 define a valve chamber 8 between them.

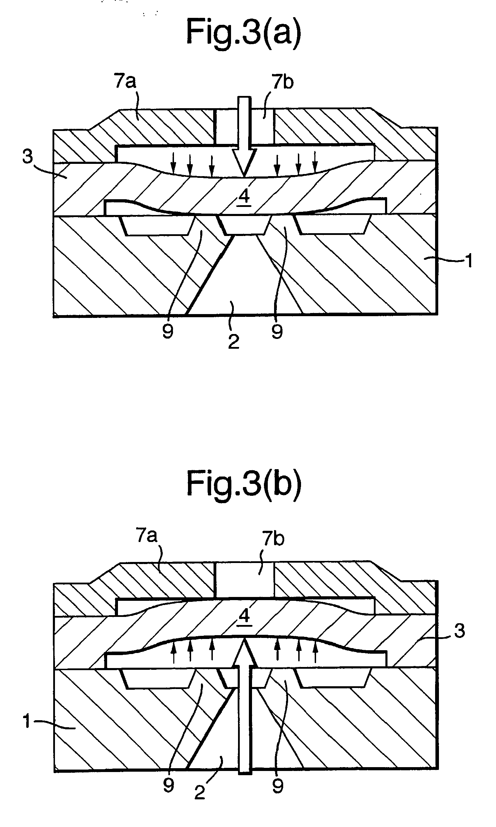

Under forward pressure the movable valve plate 4 will deflect downwards, as shown in Figure 3a, and allow the fluid to flow through the inlet aperture 7b on the top plate 7a. Fluid will then flow through the holes 6 around the supporting arms 5 and finally through the outlet aperture 2 in the substrate 1. In order to prohibit the valve plate 4 from closing tightly onto the outlet aperture 2 at high forward pressure, hence blocking the flow, pillars 9 are fabricated in the substrate 1. At reverse pressure the valve plate 4 is lifted and pushed against the top plate 7a, as illustrated in Figure 3b, closing the gap and stopping the flow.

In alternative embodiments of the device, the inlet aperture 7b, outlet aperture 2 and/or the valve plate 4 may be circular. Depending on the manufacturing process it may be advantageous to incorporate holes in the flexible support arms 5 to aid removal of underlying sacrificial layers. The valve plate 4 may be fabricated in such a way that it is thicker than the flexible supporting arms 5 thus increasing its rigidity.

The substrate 1 is typically a single crystal silicon wafer. A plurality of valves can be fabricated simultaneously on this wafer if desired. The technology is such that other microfluidic components can also be simultaneously fabricated to enable systems or multiple systems to be produced on each silicon wafer.

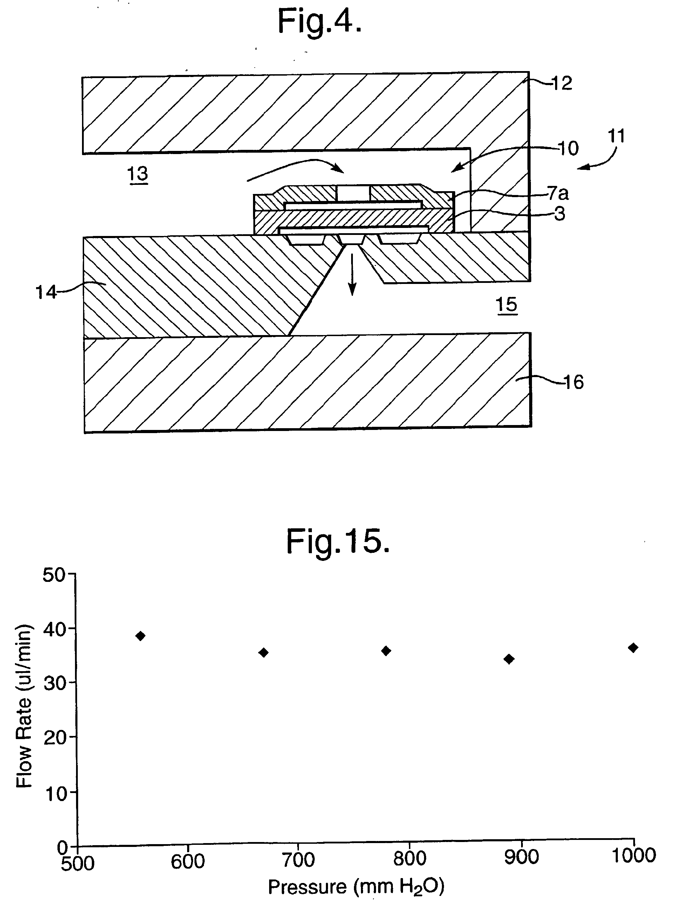

Figure 4 illustrates how the valve, indicated at 10, may be incorporated in a flow channel as part of a microfluidic system 11. While three substrates are employed only two require to be patterned. The upper substrate 12, which may be glass, silicon or other suitable material, has a channel or recess 13 formed in its lower surface. The middle substrate 14, typically a silicon wafer, contains the microvalve 10 with an additional flow channel 15 incorporated in the lower surface. The bottom substrate 16, of silicon or glass, encloses the outlet channel 15 (The substrate 14 takes the place of substrate 1). During operation, fluid can flow via the inlet channel 13, through the valve 10 and out the outlet channel 15. If pressure is applied in the opposite direction the valve will close to reduce or prevent fluid flow.

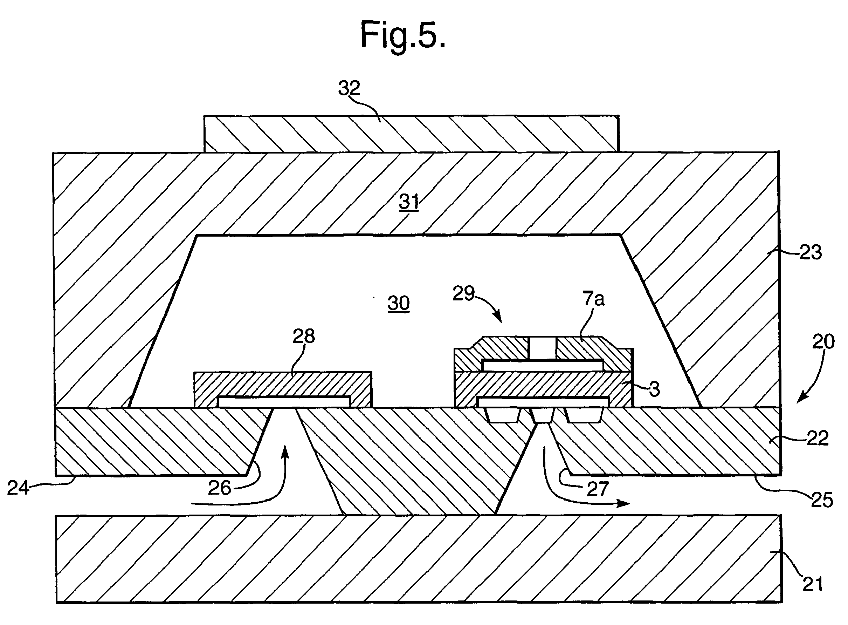

An example of how the microvalve can be integrated into a micropump is shown in Figure 5. The micropump 20 comprises a silicon or glass substrate 21 supporting a middle substrate 22 which in turn supports an upper substrate 23. The middle substrate 22 has been formed with inlet and outlet channels 24,25 which communicate with respective inlet and outlet apertures 26,27. The middle substrate 22 is also formed with an inlet valve 28 which may have a similar form to the layer 3 of the microvalve shown in Figure 1 and can be flexed so as to close the aperture 26. In addition, the middle substrate 22 is formed with an outlet valve 29 having a construction similar to the microvalve of Figure 1.

A pump chamber 30 is formed between a diaphragm 31 of the upper substrate 23 and the middle substrate 22. The substrate 23 is attached to the substrate 22 following formation of the diaphragm 31. Although three substrates are required, it is only necessary to pattern two of these.

To operate the pump, a means of deflecting the diaphragm 31 is required; this may be achieved through the use of a piezoelectric, thermal or other type of actuator 32. When the diaphragm 31 is deflected downwards, the increased pressure in the pump chamber 30 will cause the outlet valve 29 to open and fluid to flow into the outlet channel 25. As the diaphragm 31 returns to rest or is deflected upwards the reduced pressure in the chamber 30 will cause the outlet valve 29 to close and the inlet valve 28 to open allowing the pump chamber to fill with fluid from the inlet channel 24. Continued repetition of this action will thus pump fluid from inlet to outlet.

### Microvalve Fabrication

The microvalve structure can be fabricated using a combination of surface and bulk micromachining techniques. One method by which the microvalve can be fabricated is described here, however, those skilled in the art will recognise the possibility of alternative fabrication methods.

The process described here employs Local Oxidation of Silicon (LOCOS) and Chemical Mechanical Polishing (CMP) techniques to assist in maintaining a reasonably planar surface during the surface micromachining process.

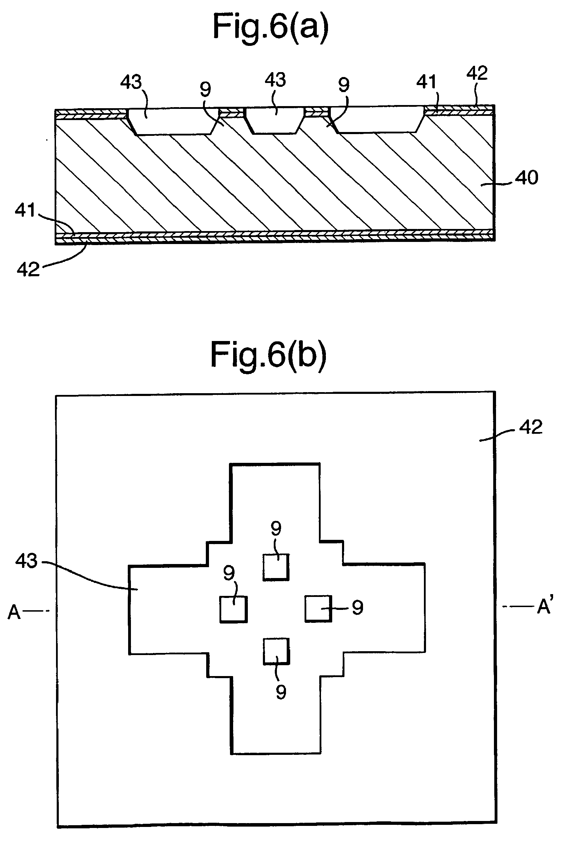

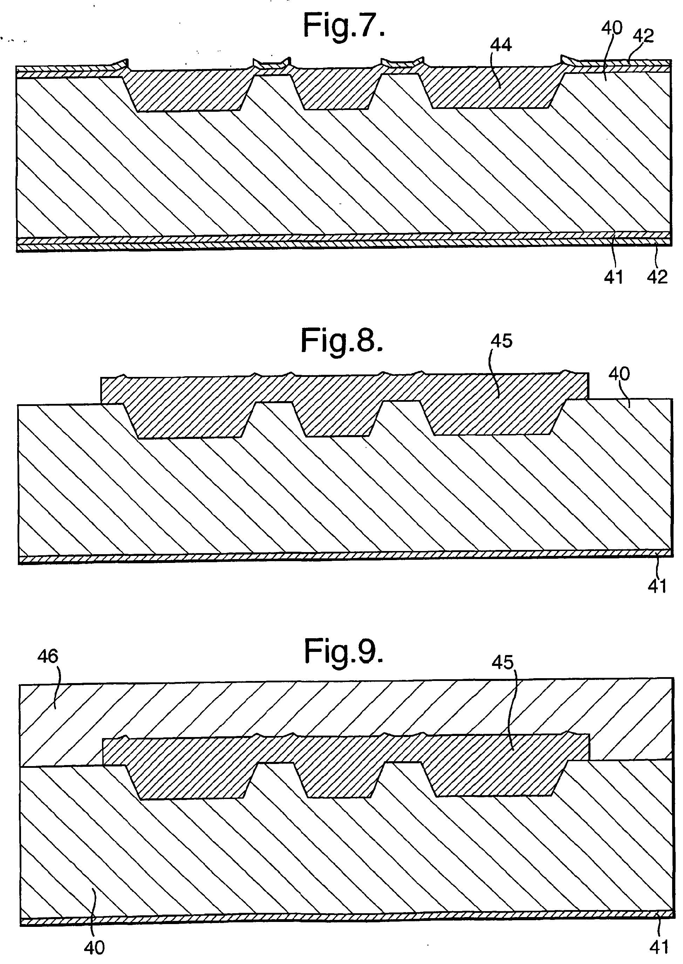

The fabrication of the base substrate 1 starts by covering a silicon substrate wafer 40 with a silicon dioxide layer 41 (typically 100 nm thick) and a silicon nitride layer 42 (typically 100 nm thick). These layers are then patterned using standard photolithography techniques and the exposed silicon is etched, typically to a depth of 1.5 µm, forming a recess 43 with four protruding pillars 9, as shown in Figure 6. Thermal oxidation is used to form a recessed layer of silicon dioxide 44 according to the standard LOCOS process, Figure 7.

The silicon nitride layer 42 is removed and a layer of silicon dioxide 45 (typically 1µm thick) is deposited and etched to expose the silicon wafer surface around the perimeter of the valve, Figure 8. Next, a thick polycrystalline silicon layer 46 (typically 3µm) is deposited. This is polished to produce a flat surface, Figure 9. Any polycrystalline silicon which formed on the back surface of the wafer is removed.

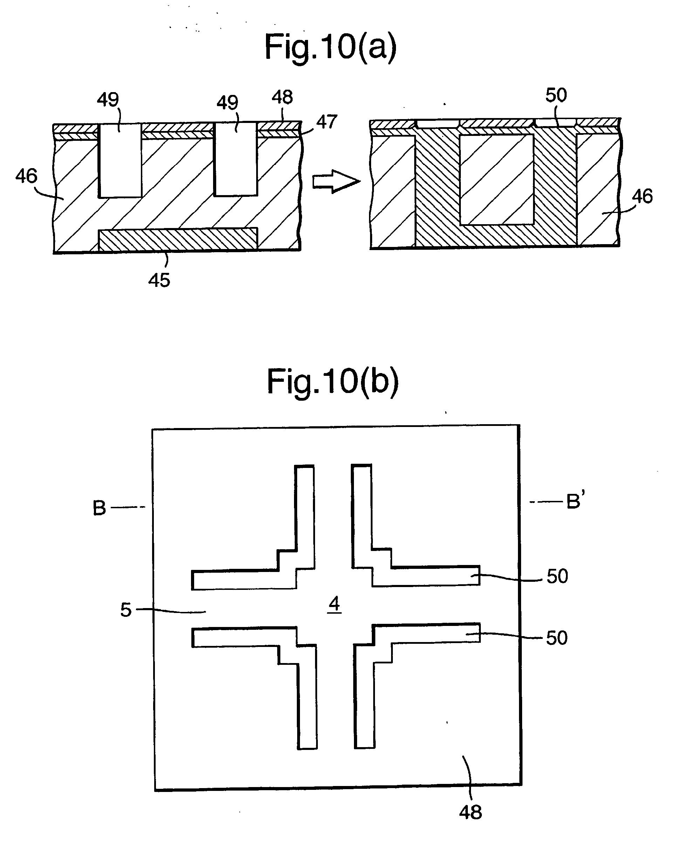

Figure 10 shows the formation of the valve closure plate 4 and the four supporting arms 5. This is performed using a LOCOS technique to maintain a planar surface. The wafer from Figure 9 is coated with silicon dioxide 47 and silicon nitride 48 layers that are then patterned. The exposed polycrystalline silicon regions are partially etched 49 to remove approximately ½ - ²/₃ the thickness of the layer. Silicon dioxide 50 is thermally grown to consume the remaining polycrystalline silicon in the etched recesses. The oxide surface becomes approximately level with the top of the polycrystalline silicon 46. The nitride layer 48 is subsequently removed.

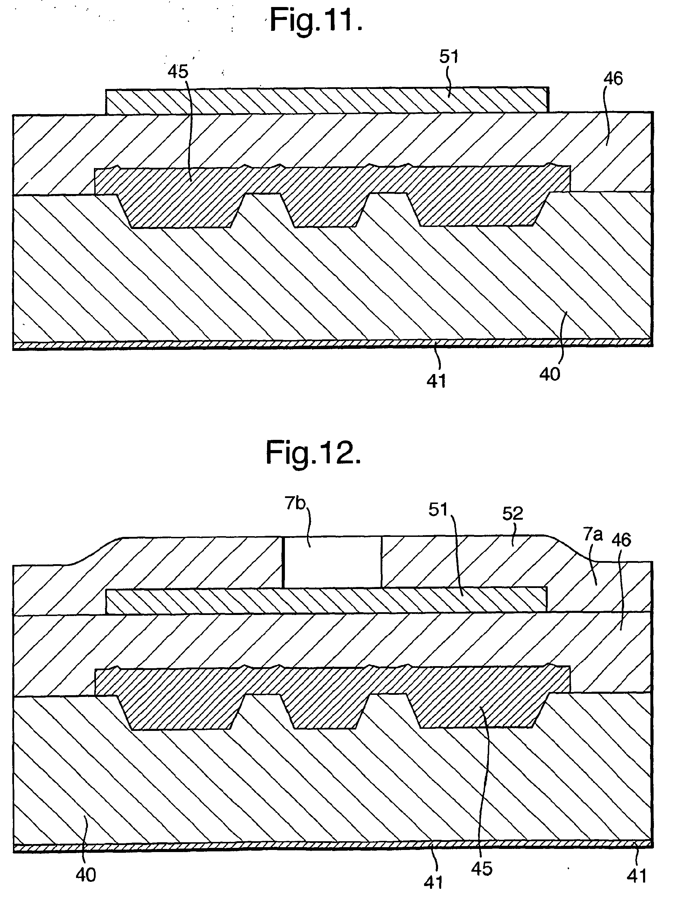

A silicon dioxide layer 51 (typically 1µm) is deposited and etched to expose the first polycrystalline silicon layer 46, Figure 11. A second layer of polycrystalline silicon 52 (typically 2.5µm thick) is deposited and etched to form the valve closure bridge with aperture 7b, Figure 12. The polycrystalline silicon at the back surface is removed by plasma etching.

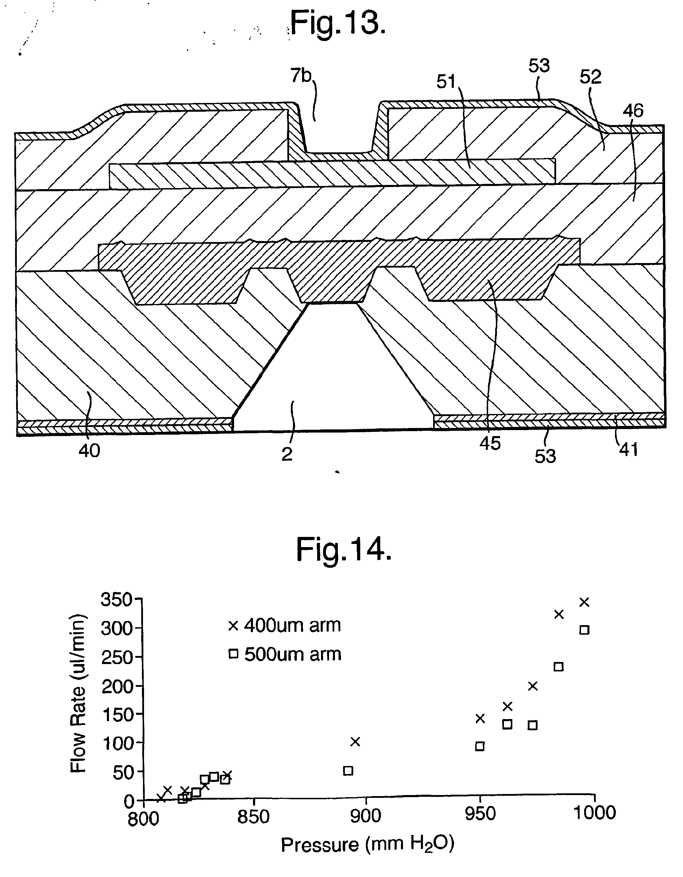

A layer of silicon nitride 53 (typically 200 nm) is deposited. The nitride layer at the front surface will act as protection for the polycrystalline valve structure. At the back surface, the nitride layer is patterned and the silicon, etched through in potassium hydroxide (KOH) solution Figure 13 to form aperture 2. Finally the oxide layers are removed using concentrated hydrofluoric acid (HF) solution to release the valve structure.

Typical flow characteristics for microvalves of this design, fabricated using the above process are shown in Figure 14 and Figure 15. The forward and reverse flow measurements were evaluated by flowing de-ionised water through the valve. Figure 14 represents the forward flow-pressure characteristics of a microvalve with supporting arm lengths of 400 µm and 500 µm. The reverse flow-pressure characteristics are as shown in Figure 15. The maximum forward flow rates are approximately 10 times higher than the reverse flow for these particular devices.

## Claims

1. A passive microvalve comprising first (2) and second (7b) apertures and a closure member (4) for closing the second aperture, **characterized in that** the microvalve invludes a substrate (1) having the first aperture, on which is fabricated a surface micromachined valve structure formed by an upper plate (7a) mounted above the substrate and having the second aperture (7b) opening into a space defined between the substrate and the upper plate, and **in that** the closure member is mounted in the space and movable between a first position in which it allows fluid flow between the first and second apertures and a second position in which it closes the second aperture.

2. A microvalve according to claim 1, wherein the closure member (4) is supported by at least one flexible arm (5).

3. A microvalve according to claim 1 or claim 2, wherein the closure member (4) forms part of a flexible diaphragm.

4. A microvalve according to any of the preceding claims, further comprising at least one stop (9) to limit movement of the closure member (4) towards the first aperture.

5. A microvalve according to claim 4, wherein the stop (9) is provided on the substrate (1).

6. A microvalve according to any of the preceding claims, wherein the substrate (1) comprises a single crystal silicon wafer, gallium arsenide, glass, quartz, ceramic, metal or plastic.

7. A microvalve according to any of the preceding claims, wherein the upper plate (7a) and/or the closure member (4) are formed by polycrystalline silicon, metal, polyamide, glass or plastic.

8. A microfluidic device comprising a plurality of microvalves fabricated on the same side of a substrate in communication with respective apertures extending through the substrate, at least one microvalve being constructed in accordance with any of the preceding claims.

9. A micropump comprising a substrate and a flexible diaphragm located over the substrate to define a pump chamber; an inlet microvalve and an outlet microvalve mounted on a side of the substrate facing the flexible diaphragm and in communication with respective apertures extending through the substrate, at least one of the microvalves being constructed in accordance with any of claims 1 to 7; and an actuator for causing the diaphragm to flex and thereby cause fluid flow in a pumping direction through the micropump.

## Patentansprüche

1. Passives Mikroventil mit ersten (2) und zweiten (7b) Aperturen und einem Schließglied (4) zum schließen der zweiten Apertur, **dadurch gekennzeichnet, dass** das Mikroventil ein die erste Apertur aufweisendes Substrat (1) umfasst, auf dem eine auf der Oberfläche mikromaschinell erzeugte Ventilstruktur hergestellt ist, die durch eine obere Platte (7a) gebildet wird, die oberhalb des Substrats befestigt ist und die zweite Apertur (7b) aufweist, die sich in einen zwischen dem Substrat und der oberen Platte definierten Raum öffnet, und **dadurch**, dass das Schließglied in dem Raum befestigt ist und zwischen einer ersten Position, in der es einen Fluidfluss zwischenden ersten und zweiten Aperturen ermöglicht, und einer zweiten Position bewegbar ist, in der es die zweite Apertur schließt.

2. Mikroventil nach Anspruch 1, bei dem
das Schließglied (4) durch wenigstens einen flexiblen Arm (5) abgestützt ist.

3. Mikroventil nach Anspruch 1 oder 2, bei dem
das Schließglied (4) Teil eines flexiblen Diaphragmas bildet.

4. Mikroventil nach einem der vorherigen Ansprüche, ferner mit
wenigstens einem Anschlag (9), um eine Bewegung des Schließglieds (4) in Richtung auf die erste Apertur hin zu begrenzen.

5. Mikroventil nach Anspruch 4, bei dem
der Anschlag (9) auf dem Substrat (1) vorgesehen ist.

6. Mikroventil nach einem der vorherigen Ansprüche, bei dem
das Substrat (1) einen einzelnen Siliziumkristallwafer, Galliumarsenid, Glass, Quarz, Keramik, Metall oder Kunststoff umfasst.

7. Mikroventil nach einem der vorherigen Ansprüche, bei dem
die obere Platte (7a) und/oder das Schließglied (4) durch polykristallines Silizium, Metall, Polyamid, Glas oder Kunststoff gebildet sind.

8. Mikrofluidische Vorrichtung mit einer Mehrzahl von Mikroventilen, die auf der gleichen Seite eines Substrats in Verbindung mit entsprechenden Aperturen hergestellt sind, die sich durch das Substrat erstrecken, wobei wenigstens ein Mikroventil gemäß einem der vorherigen Ansprüche aufgebaut ist.

9. Mikropumpe mit einem Substrat und einem flexiblen Diaphragma, das über dem Substrat angeordnet ist, um eine Pumpkammer zu definieren, einem Einlassmikroventil und einem Auslassmikroventil, die auf einer Seite des Substrats befestigt sind, die dem flexiblem Diaphragma gegenüber liegt, und in Verbindung mit entsprechenden Aperturen stehen, die sich durch das Substrat erstrecken, wobei wenigstens eines der Mikroventile gemäß einem der Ansprüche 1 bis 7 aufgebaut ist, und einem Aktuator, um zu bewirken, dass sich das Diaphragma flexibel verformt und **dadurch** einen Fluidfluss in einer Pumprichtung durch die Mikropumpe hindurch verursacht.

## Revendications

1. Microvanne passive comprenant une première (2) et une seconde (7b) ouverture et un élément de fermeture (4) pour fermer la seconde ouverture, **caractérisée en ce que** la microvanne comprend un substrat (1) comportant la première ouverture, sur lequel est fabriquée une structure de vanne dont la surface est micro-usinée formée par une plaque supérieure (7a) montée au-dessus du substrat et comportant la seconde ouverture (7b) s'ouvrant dans un espace défini entre le substrat et la plaque supérieure, et **en ce que** l'élément de fermeture est monté dans l'espace et peut se déplacer entre une première position dans laquelle il permet l'écoulement de fluide entre la première et la seconde ouverture, et une seconde position dans laquelle il ferme la seconde ouverture.

2. Microvanne selon la revendication 1, dans laquelle l'élément de fermeture (4) est supporté par au moins un bras souple (5).

3. Microvanne selon la revendication 1 ou 2, dans laquelle l'élément de fermeture (4) fait partie d'un diaphragme souple.

4. Microvanne selon l'une quelconque des revendications précédentes, comprenant, en outre, au moins une butée (9) pour limiter le déplacement de l'élément de fermeture (4) vers la première ouverture.

5. Microvanne selon la revendication 4, dans laquelle la butée (9) est prévue sur le substrat (1).

6. Microvanne selon l'une quelconque des revendications précédentes, dans laquelle le substrat (1) comprend une galette de silicium monocristallin, de l'arséniure de gallium, du verre, du quartz, de la céramique, du métal ou du plastique.

7. Microvanne selon l'une quelconque des revendications précédentes, dans laquelle la plaque supérieure (7a) et/ou l'élément de fermeture (4) sont constitués de silicium polycristallin, de métal, de polyamide, de verre ou de plastique.

8. Dispositif microfluidique comprenant une pluralité de microvannes fabriquées sur la même face d'un substrat en communication avec les ouvertures respectives s'étendant à travers le substrat, au moins une microvanne étant construite selon l'une quelconque des revendications précédentes.

9. Micropompe comprenant un substrat et un diaphragme souple placé sur le substrat pour définir une chambre de pompe ; une microvanne d'entrée et une microvanne de sortie montées sur une face du substrat orientée vers le diaphragme souple et en communication avec les ouvertures respectives s'étendant à travers le substrat, au moins l'une des microvannes étant construite selon l'une quelconque des revendications 1 à 7 ; et un actionneur pour fléchir le diaphragme et permettre ainsi l'écoulement de fluide dans une direction de pompage à travers la micropompe.
